# EUROPEAN PATENT APPLICATION

(11) **EP 3 747 250 A1**
(43) Date of publication of application: **09.12.2020**
(21) Application number: 20020258.8
(22) Date of filing: 02.06.2020
(51) Int. Cl.: A01D 33/06

(54) **DEVICE FOR THE REMOVAL OF STEMS AND FOLIAGE OF FIELD CROPS**

(30) Priority: 04.06.2019 NL 2023262
(71) Applicant: Van der Vegt, Erik, 8315 PH Luttelgeest (NL)
(72) Inventor: Van der Vegt, Erik, 8315 PH Luttelgeest (NL)
(74) Representative: Taneja, Bipin

(57) **Abstract**

Device for removing stems and foliage from a crop in a field, comprising:
- a main frame to be propelled in a working direction along and across the field, and
- at least one haulm-topping unit held by the main frame,
wherein the haulm-topping unit comprises a pair of cooperating discs, and a pair of disc holders for holding the discs,
wherein the disc holders comprise disc drives for rotating the discs in a same sense around respective disc centre lines, wherein at their trailing edge the discs rotate upwardly,
wherein the discs can be set so that they converge in a horizontal direction that is opposite to the working direction, and/or in a vertically downward direction,
wherein the haulm-topping unit comprises settable biasing means for biasing the discs against each other under distortion thereof, to form a contact area at the radial inside of the circumferential edge, with which contact area stem and foliage can be clamped for their removal from the field.

The device may be provided with a disc including pins and/or a soil displacer.

## Description

### BACKGROUND OF THE INVENTION

The invention relates to a device for removing stem and foliage from agricultural crops in the field. The invention relates in particular to the removal of stem and foliage from tuberous plants, more in particular in application to potato plants.

Devices for removing stem and foliage from agricultural plants in the field are known under the name of "haulm toppers". They are used to facilitate the harvesting process of tuberous plants in the soil. Once the stem and foliage have been pulled away from the tuber, the tuber stops growing. After a while, the tuber can be harvested using a specific harvester.

Several types of haulm toppers are known.

A first type of haulm topper is equipped with pairs of bands or belts that are driven in a substantially horizontal plane, and are capable of clamping a stem and foliage in between them and then pulling these rearward relative to the ground and away from the rest of the plant. An example thereof is described in patent application NL-9301688.

A second type of haulm topper is equipped with pairs of clamping bodies that rotate counter to each other. The clamping bodies can be configured as elongated spheres of elastic material that rotate around substantially horizontal, parallel centre lines, as show in patent NL-99872 and patent NL-189994. Alternatively, they can be configured as pneumatic tyres rotating around substantially vertical, parallel centre lines, as shown in patent application GB-2056240. In other embodiments the clamping bodies are positioned for rotation around centre lines that are at an angle to each other. In patent application NL-7808386 a haulm topper is equipped with a pair of resilient spoked wheels having solid rubber tyres or rubber wheels that are downwardly convergent in a vertical plane that is transverse to the direction of travel. The rotatively driven wheels are biased against each other in the lower edge area in order to be able to clamp the stems at that location and pull them away. The foliage will already have been removed from the stems by means of rotating clappers.

### SUMMARY OF THE INVENTION

It is an object of the invention to provide a device of the type mentioned in the preamble, with which stems and foliage can be reliably separated from a tuber situated in the soil.

It is an object of the invention to provide a device of the type mentioned in the preamble that has a versatile usability.

According to one aspect, the invention provides a device for removing stems and foliage from a crop in a field, comprising:
- a main frame to be propelled in a working direction along and across the field, and
- at least one haulm-topping unit held by the main frame,
wherein the haulm-topping unit comprises a pair of cooperating discs, each defining a main plane and each being able to bow away from its main plane, and a pair of disc holders for holding the discs,
wherein the disc holders comprise disc drives for rotating the discs in a same sense around their respective disc centre lines, wherein at their trailing edge the discs rotate upwardly,
wherein the discs of the pair of discs converge towards each other in a downward direction in a vertical plane transverse to the working direction,
wherein the discs of the pair of discs converge towards each other in a horizontal plane in a direction that is opposite to the working direction, and
wherein the haulm-topping unit comprises settable biasing means for biasing the discs against each other under distortion thereof, to form a contact area at the radial inside of the circumferential edge.

With the device according to the invention the haulm on a bed or ridge will enter between the driven discs and subsequently end up in the contact area of the discs that are biased against each other, in a manner that is advantageous to the process in order to be grasped and clamped by the discs there, and then be pulled away from the ridge or the bed. Setting the biasing means enables an optimal adjustment with respect to the haulm to be processed in the case at hand. The direction of the pulling force exerted on the haulm, in particular the ratio between the horizontal and vertical directional components, can then be influenced.

It is noted that from French patent application 2.860.682 (D1) a device and method are known for removing male inflorescence from a maize plant stem by means of two initially flat discs that are able to bow away from the main plane. The device is also furnished to be active in a top part of the plant stem and to spare the leaves of the plant as much as possible in the process.

In a first further development the biasing means comprise first adjustment means for setting the angle between the disc centre lines of both discs, as seen in a first plane that comprises both disc centre lines. Here, the first adjustment means can be operative around their respective first adjustment centre lines that intersect the respective disc centre lines perpendicularly.

In one embodiment thereof, the first adjustment centre lines have a horizontal and a vertical directional component, which directional components have a ratio of between 1:2 and 2:1. This enhances the setting of the disc angle in the horizontal and the vertical (transverse) plane.

The first adjustment means can be furnished for setting the mutual, downwardly opening angle between the first adjustment centre lines in a range of 160 - 180 degrees.

In a further or additional further development, the disc holders are arranged such in the haulm-topping unit that the surface centre of gravity of the contact area is situated behind the lowest point of the discs. This enhances the haulm entering in between the discs.

The biasing means can hereby comprise second adjustment means for setting the location of the contact area on the rotor surface of the discs, by which the options of adjusting to the actual circumstances are further increased. The second adjustment means can hereby be furnished with an adjustment range that allows for the contact area to be situated entirely behind the lowest point of the discs.

The second adjustment means can be furnished with an adjustment range that allows for the contact area to be situated entirely in the lower halves of the discs.

The second adjustment means can be furnished for setting the angle of the first plane that comprises the disc centre lines, relative to the working direction. The second adjustment means can then be operative for setting the disc holders around respective second adjustment centre lines that are perpendicular to the respective first adjustment centre lines.

The second adjustment centre lines in the first plane can be set at an angle relative to the respective disc centre lines in an angle range of between 0 +/- 30 degrees.

In a further development, the biasing means comprise third adjustment means for setting the horizontal distance between the centres of the discs. The third adjustment means can be adjustable around respective third adjustment centre lines that are situated outside the discs. In that way, an additional adjustment option for the contact area is provided.

In a further development, the haulm-topping unit comprises a fork, wherein the disc holders are arranged on the arms of the fork. The disc holders can comprise a main support and an auxiliary support, wherein the auxiliary support is situated between the motor and the main support and can be set relative thereto around the first adjustment centre line by the first adjustment means.

The angular position of the main support can be set relative to the respective arm by the second adjustment means.

In one embodiment, the arms of the fork converge in a downward direction and/or in a direction opposite to the working direction. As a result, the fork arms already form an inclined, converging basis for the disc holders and consequently for the discs.

According to an example of an embodiment of the invention, the fork arms are constructed wherein the centre line of the point of rotation of the fork arm is parallel to the mounting surface of the first motor support. The shape and bends of the fork arm can provide varieties. For instance, it could also function with a straight fork arm and subsequently a larger rotation of the motor supports relative to each other. In this example of an embodiment, the point of rotation of the fork arm has an angle of approximately 45 degrees to the ground surface.

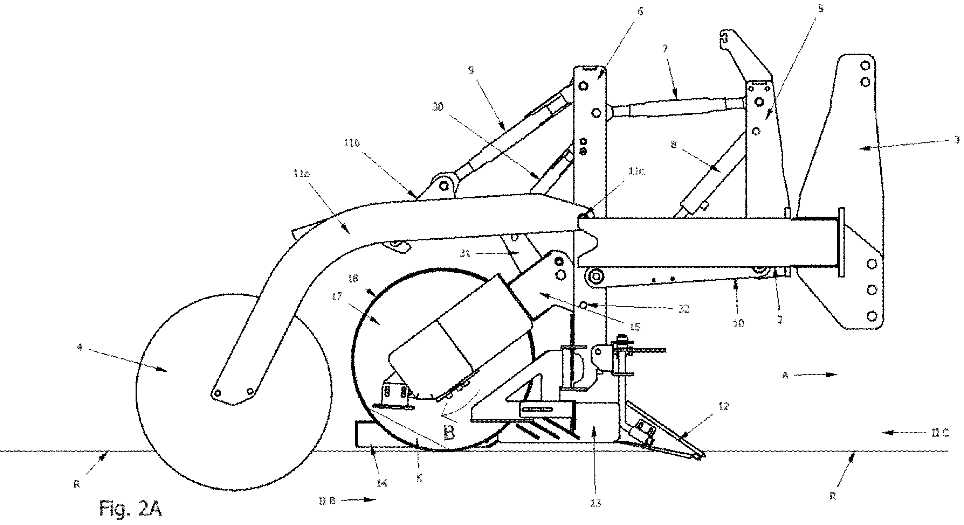

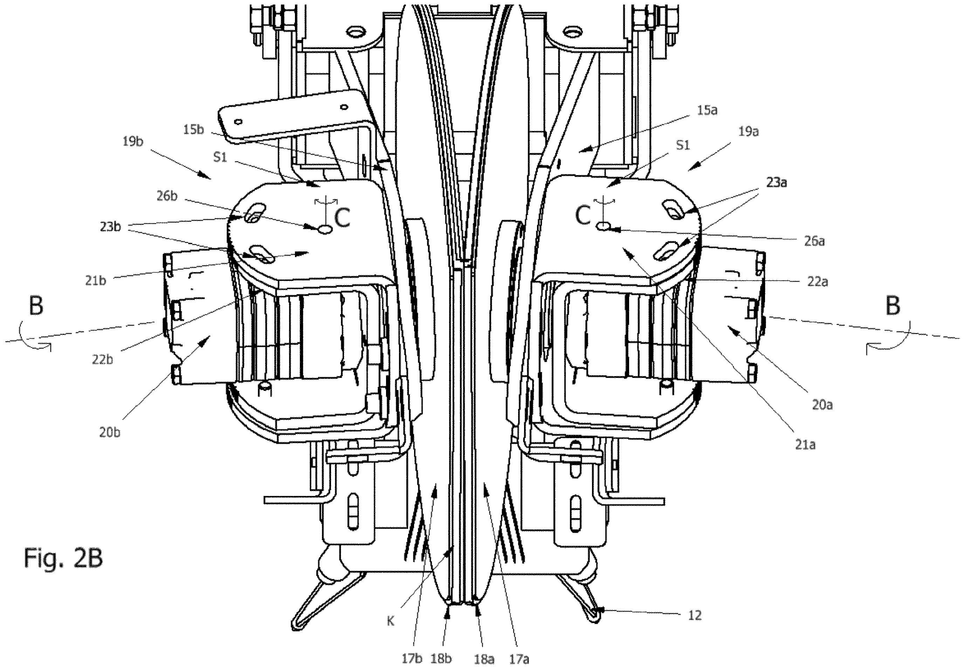

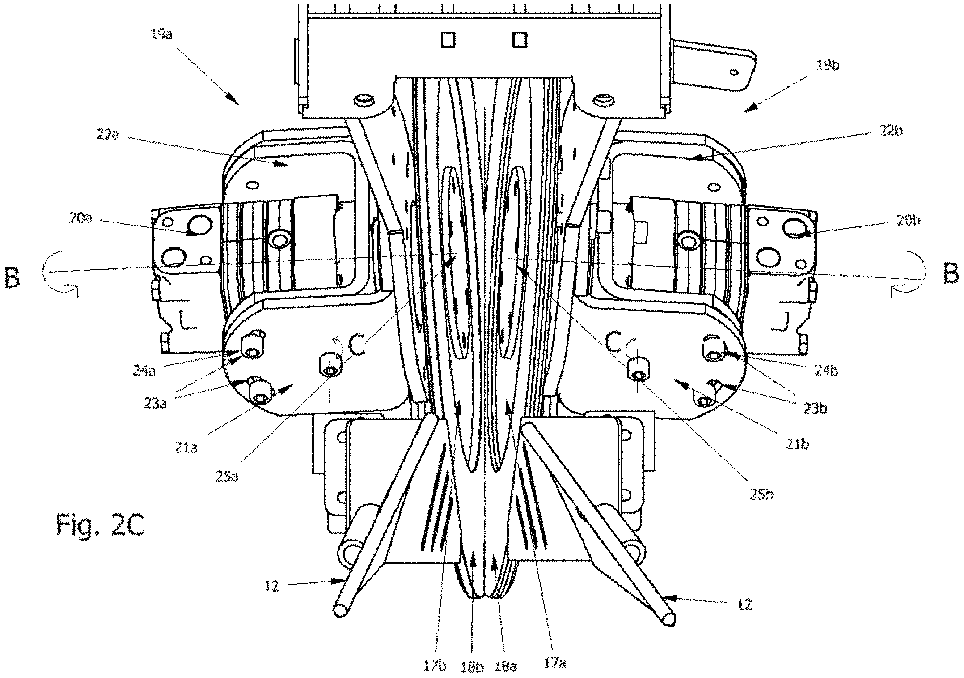

It is possible to adjust the height of the disc relative to the slide plates. This adjustment takes place around rotary shaft 32 in Figure 2A, which is situated substantially transverse to the mounting surface. Please note that this would also be possible with a point of rotation that is at a right angle to the ground surface and also with a different setting of the position of the motor supports.

In the embodiment with the above-mentioned fork, the third adjustment means can be configured for setting the distance between the fork arms at the location of the discs. The third adjustment centre lines can be parallel to the first adjustment centre lines. The third adjustment centre lines can be situated at a location along the fork that is higher than the location of attachment of the respective disc holder on it. The third adjustment centre lines could also be at an equal height or even below the location of the attachment of the respective disc holder. In other words, the third adjustment centre lines could be positioned both below and above the centre line of the clamping discs. The position of the point of rotation of the fork holder is positioned outside of the discs for obtaining only a small angular rotation of the discs when the fork arms are adjusted. A horizontal adjustment of the motors (at right angles to the direction of travel) is an alternative in order to increase the contact surface of the discs.

The advantage of a higher rotation centre line of the fork arms is to avail of a larger adjustment arm. The further this third adjustment centre line is situated away from the disc centre line M1, the larger the adjustment arm and the stroke of this arm.

The third adjustment means may further comprise spring means that allow for a spring-cushioned divergence of the fork arms relative to each other.

In an alternative embodiment the third adjustment means comprise a hydraulic cylinder with an adjustable pressure. In that way, the pressure force of the discs against each other can easily be set. In case of any blockage, the hydraulic cylinder can be operated to move the discs apart so that dirt can easily be removed.

In one embodiment, the third adjustment centre line is transverse to the fork arm, as seen in a vertical plane of projection that comprises the working direction, like in Figure 2A. In another embodiment the biasing means and discs are configured to allow the contact area to be at a radial inward distance from the circumferential edge of the discs.

According to another aspect of the invention, the device can be provided with means for setting the height of the haulm-topping unit, furnished for keeping the lowest point of the discs near the level of the location where the stem projects from the surface of the field during the propulsion of the device across the field.

In a further development of the haulm-topping device according to the invention the discs are assemblies. They can have an inner disc part of a relatively resilient and/or elastic material, such as for instance a rubber, for direct contact with stem and foliage, and an outer disc part that has more flexural stiffness than the inner disc part of resilient and/or elastic material.

In a first further development of the device according to the invention, the discs each comprise an outer disc part that forms a flat surface made of resiliently bendable material, such as steel, wherein the disc part has a circumambulating circumferential edge, preferably an uninterrupted circular circumferential edge. The inner disc part, also as a flat surface, can be attached to the surface of the outer disc part, for instance by means of an adhesive.

The for instance steel outer and inner disc parts are biased towards each other by means of the biasing means under distortion of these inner disc parts, as a result of which the resilient and/or elastic inner disc parts are pressed against each other and form a continuous contact area that may be an at least substantially vertical flat surface.

In a second further embodiment, the discs comprise an outer disc part having a disc hub and a number of pins extending from the hub towards the disc edge, wherein the discs further each comprise an inner disc part situated at the disc sides that face each other, wherein the flexural stiffness of the pins exceeds that of the inner disc part, wherein the pins are arranged so as to be regularly distributed in a circumferential sense, having an interstitial space between consecutive pins, wherein the pins have free radial ends, wherein the pins of both discs can cooperate to distort the inner disc parts in the contact area between them.

Preferably, the biasing means are furnished for setting the relative positions of the disc hubs in a circumferential sense and consequently of the pins of the one disc relative to the pins of the other disc.

The cooperating pins of the discs largely define the distortion of the inner disc parts, which can be relatively soft and resilient, which can be advantageous to the engagement of stem and foliage. With a combination of relatively flexurally stiff pins and inner disc parts, that are distortable by the pins, with settable biasing means in the device according to the invention, a large number of possible configurations (such as in regard of size and shape) of the contact area are made available. In this way, adjustment in regard of the crop (such as type and condition) to be treated, is enhanced.

The generally circular circumferential edge of the inner disc parts can define the disc edge thereof. The inner disc parts can be made of a rubbery material. At least in the section intended for forming the contact area, the inner disc parts can have a thickness that depends on the material of the inner disc parts and on the spacing between the pins. The inner disc parts may have a thickness in the range of 0.5 cm -1.5 cm.

Both disc parts can distort away from their main plane. For instance, it can be the inner disc part that distorts, both in the embodiment with an outer disc part that forms a flat surface and in the embodiment with an outer disc part having a disc hub and pins. The outer disc part can also distort away from its plane, at least if the pins are able to bend. If that is not the case, then it will be the inner disc part that distorts nonetheless.

According to another aspect, the invention provides a device for removing stems and foliage from a crop in a field, comprising:
- a main frame to be propelled in a working direction along and across the field, and
- at least one haulm-topping unit held by the main frame,
wherein the haulm-topping unit comprises a pair of cooperating discs, and a pair of disc holders for holding the discs,
wherein the disc holders comprise disc drives for rotating the discs in a same sense around respective disc centre lines, wherein at their trailing edge the discs rotate upwardly,
wherein the discs can be set so that they converge in a horizontal direction that is opposite to the working direction, and/or in a vertical downward direction,
wherein the haulm-topping unit comprises settable biasing means for biasing the discs against each other under distortion thereof, to form a contact area at the radial inside of the circumferential edge with which contact area the stem and foliage can be clamped for their removal from the field,
wherein the discs have a disc hub and a number of pins that extend from the hub towards the disc edge,
wherein the discs furthermore each comprise a disc element situated at the disc sides that face each other,
wherein the flexural stiffness of the pins exceeds that of the inner disc parts, wherein the pins are arranged so as to be regularly distributed in a circumferential sense, having an interstitial space between consecutive pins,
wherein the pins have free radial ends,
wherein the biasing means are furnished for setting the relative positions of the disc hubs in a circumferential sense and consequently the relative positions of the pins of the one disc relative to the pins of the other disc,
wherein the pins of both discs can cooperate to distort the inner disc parts in the contact area between them.

It is noted that in patent application NL-7808386 a haulm topper is described and shown which in one embodiment is equipped with a pair of wheels converging downwards in a vertical plane that is transverse to the direction of travel, which wheels have a series of resilient spokes and solid rubber rims attached to the outer ends of those spokes. The rotatively driven wheels are biased against each other in the lower edge area of the rims, in order to be able to clamp and pull away the previously defoliated stems at that location. In another embodiment, the spoked wheels have been replaced by discs composed fully of rubber, which, if necessary, may be spring-reinforced.

In one embodiment, the discs have been arranged so as to be offset in a circumferential sense, in such a manner that the pins of the one disc extend next to interstitial spaces between the pins of the other disc, as seen in a vertical plane of projection that comprises the working direction. A pin of the one disc can then exert a pressure force in the interstitial space between the two adjacent pins of the other disc, wherein the interstitial space offers room for distortion of the inner disc part or the inner disc parts at that location. As a result, the inner disc parts can form partial surfaces in the contact area that have a normal that has a tangentially oriented directional component. By this, the engagement, in particular clamping, of a stem and foliage between both discs can be enhanced.

In one embodiment thereof, the pins of the one disc extend in a centre plane of the interstitial space between the two adjacent pins of the other disc.

The biasing means can be furnished to allow the inner disc parts to distort as radial mountains and valleys at the location of the contact area by means of the pins, wherein the mountains of the one disc engage with the valleys of the other disc and vice versa. In other words, the mountains and valleys of both discs may relate to each other like two waves with or without a phase difference between them.

The biasing means can be furnished for keeping the outer ends of the pins of both discs at a horizontal distance from each other at the location of the contact area, with the distance being smaller than the thickness of the inner disc part at that location in an unloaded condition.

The inner disc parts may show an undulating course in a circumferential sense at the location of the contact area at the edge of the disc.

In one embodiment, the contact area comprises elongated radial partial contact areas, each time situated in between two pins of respective discs.

In one embodiment, the inner disc parts extend radially from the outer ends of the pins. In that way the pins will less quickly damage any high-lying potatoes or other crops present near the surface. Further, it will be easier for the inner disc part to bend or curl up at the edge, resulting in a round edge. If the haulm to be topped is not situated exactly at the centre between the inner disc parts, then the haulm can bend around the occurring round edge, as a result of which the haulm will snap less quickly.

By using pins in combination with inner disc parts made of rubber or comparable resilient and/or elastic material, it is possible to place the discs at a relatively large mutual angle to each other and to achieve a large contact area nonetheless. An additional advantage is that because of the distortion of the inner disc parts from the notional vertical centre plane of the pair of discs, any product that might stick to the inner disc parts can be loosened more easily.

The pins can be situated on a cone surface, in particular a truncated conical surface, of which the exterior side faces the other disc. As a result, a somewhat even engagement in a radial direction can be achieved despite the inclined position of the disc hubs.

The inner disc parts can be flat, so that in an unloaded condition, their edges are spaced apart from the pins. Alternatively, the inner disc parts can have a shape with a truncated conical or conical circumferential portion that follows the cone formed by the pins. This way an advantageous input opening for the stem with foliage is provided.

The pins of each outer disc part can have a round surface at the side that is oriented towards the other, in particular, they can form circular rods. This enhances the distortion of the inner disc parts.

According to a further aspect, the invention provides a method for removing stems and foliage from a crop in a field, in particular a crop on a field ridge, comprising:
- propelling a haulm-topping device, according to an embodiment of a haulm-topping device as described above, in a working direction along and across the field, wherein the haulm-topping device comprises:
- a main frame and at least one haulm-topping unit held by the main frame,
wherein the haulm-topping unit comprises a pair of cooperating discs, each defining a main plane and each being able to bow away from its main plane, and a pair of disc holders for holding the discs,
wherein during propulsion of the haulm-topping device, the discs are rotated in a same sense around their respective disc centre lines, wherein, at their trailing edge the discs rotate upwardly,
wherein the discs of the pair of discs converge towards each other in a downward direction in a vertical plane transverse to the working direction,
wherein the discs of the pair of discs converge towards each other in a horizontal plane in a direction that is opposite to the working direction, and
wherein during propulsion of the haulm-topping device, the discs are biased against each other under distortion thereof, to form a contact area at the circumferential edge,
wherein during propulsion of the haulm-topping device, a lower section of the stem with foliage is allowed to enter in the space between the discs and subsequently allowed to be engaged and clamped by both discs and be pulled away from the field by the discs.

In one embodiment, the angle between the disc centre lines of both discs, as seen in a first plane that comprises both disc centre lines, is set using first adjustment means provided on the haulm-topping device. The angle can then be set around respective first adjustment centre lines that intersect the respective disc centre lines perpendicularly using the first adjustment means.

In one embodiment, the location of the contact area on the rotor surface of the discs is set using second adjustment means provided on the haulm-topping device. In one embodiment, the location of the contact area can be set using the second adjustment means so that the contact area is situated entirely behind the lowest point of the discs and/or so that the contact area is situated entirely in the lower halves of the discs. In one embodiment, the angle of the first plane that comprises the disc centre lines is set relative to the working direction using the second adjustment means. The disc holders can hereby be set around respective second adjustment centre lines that are perpendicular to the respective first adjustment centre lines.

In a further embodiment of the method according to the invention, the surface centre of gravity of the contact area is kept behind the lowest point of the discs during propulsion of the haulm-topping device. With this, the haulm is pulled in the correct direction, the front is sufficiently open for input of the haulm and the discs release the haulm in time for it to be thrown rearwards.

In one embodiment, during propulsion of the haulm-topping device, the surface centre of gravity of the contact area is kept below the disc centre lines, in particular at a height of 0.5R - R below the disc centre lines, wherein R is the radius of the discs in an unloaded condition.

In one embodiment, the outer edges of the discs are kept at least near, preferably below a height of 2 cm above the top of the field or field ridge prior to operation of the haulm-topping device on the field ridge.

In a particularization thereof, the outer edges of the discs are kept at or below the initial top of the field or field ridge, i.e. its top prior to operation of the haulm-topping device on the field or field ridge.

According to a further aspect, the invention provides a method for removing stems and foliage from a crop in a field, comprising:
- propelling a haulm-topping device, according to an embodiment of a haulm-topping device as described above, in a working direction along and across the field, wherein the haulm-topping device comprises:
- a main frame and at least one haulm-topping unit held by the main frame,
wherein the haulm-topping unit comprises a pair of cooperating discs, each defining a main plane and each being able to bow away from its main plane, and a pair of disc holders for holding the discs,
wherein during propulsion of the haulm-topping device, the discs are rotated in a same sense around their respective disc centre lines, wherein at their trailing edge the discs rotate upwardly,
wherein the discs of the pair of discs converge towards each other in a downward direction in a vertical plane transverse to the working direction,
wherein the discs of the pair of discs converge towards each other in a horizontal plane in a direction that is opposite to the working direction, and
wherein during propulsion of the haulm-topping device, the discs are biased against each other under distortion thereof, to form a contact area at the circumferential edge,
wherein during propulsion of the haulm-topping device, a lower section of the stem with foliage is allowed to enter in the space between the discs and subsequently allowed to be engaged and clamped by both discs in the contact area and allowed to be pulled away from the field ridge by the discs,
wherein use is made of discs that have a disc hub and a number of pins that extend from the hub towards the disc edge,
wherein the discs furthermore each comprise an inner disc part situated at the disc sides that face each other,
wherein the flexural stiffness - away from the main plane - of the pins exceeds that of the inner disc parts,
wherein the pins are arranged so as to be regularly distributed in a circumferential sense, having an interstitial space between consecutive pins,
wherein the discs have been arranged so as to be offset in a circumferential sense, in such a manner that the pins of the one disc extend in interstitial spaces between the pins of the other disc, as seen in a vertical plane of projection that comprises the working direction, and
wherein in the contact area, the pins bias the inner disc parts against each other.

In further embodiments of this method according to the invention, use is made of the embodiments of the haulm-topping unit according to the invention as described above.

When removing stem and foliage out of the soil of a field by pulling the stem, it may occur that the stem breaks. To reduce this risk, the invention, according to another aspect, provides a device for removing stems and foliage from a crop in a field, comprising:
- a main frame to be propelled in a working direction along and across the field, and
- at least one haulm-topping unit held by the main frame,
wherein the haulm-topping unit comprises a pair of cooperating discs, and a pair of disc holders for holding the discs,
wherein the disc holders comprise disc drives for rotating the discs in a same sense around respective disc centre lines, wherein at their trailing edge the discs rotate upwardly, wherein the discs can be set so that they converge in a horizontal direction that is opposite to the working direction, and/or in a vertical downward direction,
wherein the haulm-topping unit comprises settable biasing means for biasing the discs against each other under distortion thereof, to form a contact area at the radial inside of the circumferential edge with which contact area the stem and foliage can be clamped for their removal from the field,
wherein the device is provided with a soil displacer arranged in front of the discs in a working direction, for displacing soil in the vicinity of the stem where it projects from the field.

With this, the potential engagement area of the stem is enlarged, namely by an area that, as a rule, is stronger than the section of the stem above it. As a consequence, a stem breaking will happen less often. As the exposed section of the stem will usually be slightly tougher as well, the engagement of the stem by the discs can be enhanced, because the force with which the discs press against each other in the contact area may be larger.

In one embodiment, the soil displacer comprises a pair of rollers arranged on the main frame, in particular circular cylindrical rollers, in particular straight circular cylindrical rollers, which are arranged next to each other on the main frame, and which are kept apart from each other at an interval using the circumferential surfaces to form a narrow interstitial space, and a roller drive for rotating the rollers around substantially upright rotation centre lines, in such a manner that they rotate in the interstitial space in a direction opposite to the direction of travel. The rollers are driven to prevent that they come to a standstill and start functioning like a bulldozer.

By rotating the rollers towards each other at the front, the soil is as it were pulled away from the upcoming stem. By rotating the rollers away from each other the soil can be left behind at the rear of the rollers. The discharged soil including the stem can be clamped and released by the trailing discs.

In one embodiment, the rollers converge in a downward direction with their rotation centre lines, as seen in a vertical plane transverse to the direction of travel, in particular they converge at a contained angle of less than 10 degrees. As a result, extra room is provided in the passage between the rollers, to the displaced soil and to the foliage in the bottom section of the stem.

The rotational speed of the drive of the rollers can be set, in one embodiment between approximately 0.5 -1.5 times the speed of the device in the working direction.

In a further development, the rollers are positioned for engaging onto a stem. The rollers can thus have a centring influence on the stems that are situated sideward of the working direction centre line. The stem will then first be engaged by one of the rollers, and be urged inwards by the roller. This process is enhanced by driving the rollers inwardly.

The rollers can also have an erecting effect on the stem, at the location of a lower section thereof and where the stem will be stronger than in the section above it, as a result of which the erecting will have an optimal effect. The rollers push the stems (with or without soil) towards the centre of the field ridge or crop ridge. Because of the counter-rotating rollers or drums, the stems are pushed inwards, without their being squashed. As a result, the stems end up standing straight in the heart of the crop ridge, for instance in a width of approximately 3 to 6 cm.

According to another aspect, the invention provides a method for removing stems and foliage from a crop in a field, comprising:
- propelling a haulm-topping device in a working direction along and across the field, wherein the haulm-topping device comprises:
- a main frame and at least one haulm-topping unit held by the main frame,
wherein the haulm-topping unit comprises a pair of cooperating discs, each defining a main plane and each being able to bow away from its main plane, wherein during propulsion of the haulm-topping device, the discs are rotated in a same sense around respective disc centre lines, wherein at their trailing edge the discs rotate upwardly,
wherein the discs can be set so that they converge in a horizontal direction that is opposite to the working direction, and/or in a vertical downward direction,
wherein during propulsion of the haulm-topping device, the discs are biased against each other under distortion thereof, to form a contact area at the circumferential edge,
wherein during propulsion of the haulm-topping device, a lower section of the stem with foliage is allowed to enter in the space between the discs and subsequently allowed to be engaged and clamped by both discs in the contact area and allowed to be pulled away from the field by the discs,
wherein when operational, the edges of the discs are kept below the initial top of a field, i.e. in the condition prior to the passage of the haulm-topping unit, which field has said top prior to the operation of the haulm-topping device on the field, and the stem is clamped by the discs in the contact area, at least in a stem section that is located below said initial top.

The engagement of the stem by the discs is thus enhanced, as the force with which the discs press against each other in the contact area is allowed to be larger, as the stem is stronger or tougher there than it will be in the stem section above it. By this, the process of removing stem and foliage from the soil of a field is enhanced.

In one embodiment, prior to the discs engaging a stem with foliage, the top of the field (ridge) is lowered by displacing soil at that location. As a result, the engagement of the stem by the discs can be enhanced.

In one embodiment, the soil is displaced using a pair of rollers, in particular straight circular cylindrical rollers, arranged on the device which are arranged next to each other and which are kept apart from each other at an interval using the circumferential surfaces to form a narrow interstitial space, wherein the rollers are driven around substantially upright rotation centre lines, so that they rotate in the interstitial space in a direction opposite to the direction of travel.

In one embodiment, the rollers are kept such that their rotation centre lines converge in a downward direction, as seen in a vertical plane transverse to the direction of propulsion.

Prior to the engagement of a stem with foliage by the discs, if the stem projects from the soil at a location that is spaced apart sideward from the centre line of the operational haulm-topping device, then in one embodiment, with the used haulm-topping unit, the stem, where it projects from the soil, can be urged towards that centre line. The stem is then oriented slightly in a horizontal direction transverse to the working direction or centre line.

Prior to the engagement of a stem with foliage by the discs, in one embodiment, with the used haulm-topping unit, the stem can be oriented, at least substantially vertically, so that the stem is able to enter properly between the discs.

Urging and/or orienting the stem towards the centre line can be carried out by means of a pair of rollers arranged on the main frame, in particular circular cylindrical rollers, in particular straight circular cylindrical rollers, which are arranged next to each other on the main frame, and which are kept apart from each other at an interval using the circumferential surfaces to form a narrow interstitial space for passage of the stem, wherein the rollers are driven around substantially upright rotation centre lines, so that they rotate in the interstitial space in a direction opposite to the direction of travel.

These rollers can be kept such that their rotation centre lines converge in a downward direction, as seen in a vertical plane transverse to the direction of travel. By this, the bottom side of the assembly of rollers fits with the shape of an - often convex or downwardly widening - field ridge or crop ridge and the rollers, at their lower edges, can get as close as possible to the stem, at the location where the stem is strongest. Further, the interstitial space between the rollers can then provide space for soil and foliage.

In a combined method according to the invention, the rollers with which the top of the field ridge is lowered, are also used as orienting rollers for the stem.

In case of harvesting potatoes, the field at the location of the stems, will have the shape of a field ridge extending in the working direction. In that case, the said soil displacer will remove a top section from the field ridge.

Behind said soil displacer and/or orienting rollers, guide plates can be mounted that form a vertical passage for stems, foliage, and soil. These plates fit tightly against the rollers. These plates ensure that the stems, which have been properly positioned by the rollers, do not spring back sideward in the trajectory between the rollers and the discs as a result of which they would not be properly engaged by the discs. These guide plates guide the material up to between the discs. They may be situated relatively close above the soil surface behind the rollers, so that no stems will not be able to slip away from underneath them. The space between the guide plates may increase upwards and rearwards so that this has a releasing action and stems including soil cannot get stuck.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS

The invention will be elucidated on the basis of the examples of embodiments shown in the attached drawings, in which:
Figure 1 shows a diagonal front/ side view of an example of an embodiment of a device having a number of haulm-topping units according to the invention;
Figures 2A-C show a side view, rear view, and a front view, respectively, of a haulm-topping unit of the device of Figure 1;
Figures 3A and 3B show diagonal views according to IIIA and IIIB in Figures 4A and 4B, from above and from behind of a part of the haulm-topping unit that holds the discs, in two different biasing positions;
Figures 4A and 4B show side views of an arm including disc holder and disc, in two different positions of the contact area between the discs;
Figures 5A-C show a side view, a top view, and a front view, respectively, of an example of an embodiment of a haulm-topping unit according to the invention;
Figures 6A-D show a view of an example of an embodiment of a disc for a haulm-topping unit according to the invention, a side view of that disc, a rear view of a pair of discs of Figure 6A, and a detail of Figure 6C, respectively; and
Figures 7A-C show a diagonal front view, a side view, and a diagonal rear view, respectively, of a part of the haulm-topping unit according to Figures 5A-C.

### DETAILED DESCRIPTION OF THE DRAWINGS

The reference signs used in the following should not be to be construed as limiting the extent of the matter protected by the claims; their sole function is to make claims easier to understand.

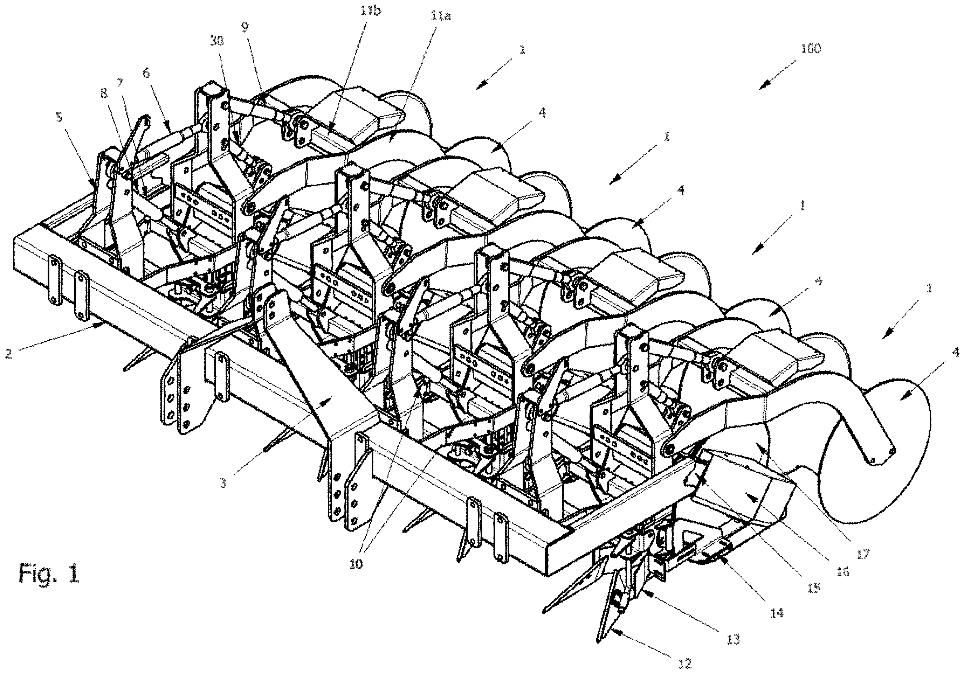

The haulm-topping device 100 of Figure 1 comprises a number of haulm-topping units 1 that are attached to a frame 2 that can be attached to a vehicle, such as a tractor, by means of suspension 3.

Each haulm-topping unit 1 comprises a support roller 4 situated at the rear, which roller is diabolo-shaped in this example in order to rollingly support on a ridge R on which the crop grows. The support roller 4 is rotatably attached to two L-shaped arms 11a, that are connected to each other by a cross beam 11b and at the location of 11c are rotatably attached to a first yoke 6. Between the first yoke 6 and the cross beam 11b a top bar 9 that can be adjusted in length, and optionally may also be a cylinder, has been arranged with which the height of the support roller 4 can be set relative to the first yoke 6. The height can also be adjusted by means of a spindle 50.

The first yoke 6 is suspended from a second yoke 5, that is stationarily attached to the frame 2. The first yoke 6 and the second yoke 5 are rotatably connected to each other, by means of two arms 10 and by means of an adjustment bar 7, forming a parallelogram that can be distorted in the vertical plane. A cylinder 8 extends diagonally through the parallelogram and with its ends is attached on the one side to the second yoke 5 and, on the other side, to a cross beam 10a that extends between the arms 10, near the first yoke 6. The cylinder 8 can be used to influence the shape of the parallelogram, in particular the height of the first yoke 6 relative to the ridge R.

Several parts are attached to the first yoke 6. First of all the so-called torpedoes 12 that are positioned to move along the sides of the ridge and which serve to guide haulm that extends sideward from the ridge, towards the centre. Haulm guide plates 13 are positioned behind the torpedoes 12, which guide plates ensure further centring guidance of the haulm towards the centre.

Further, a fork structure 15 with fork arms 15a, 15b is suspended from the first yoke 6. At the location of 32, the fork 15 is rotatably attached to the first yoke 6 and its height can be set in the vertical plane by means of an adjustment bar 30 that is rotatably attached to the first yoke 6 and a side arm 31 that is fixedly attached to the fork 15.

Slide plates 14 are attached to the fork structure 15, in particular to the fork arms 15a, 15b, which slide plates when in use are kept at the ground level or just above it for stopping soil and any tuberous plant in it, so that the tuberous plant remains in the ridge.

In the application shown, in combination with a diabolo roller 4, the cylinder 8 is able to extend/retract freely. The cylinder 8 can then be used if a first yoke 6 including fork 15 and slide plates 14 has to be lifted high or be taken out of service. Sometimes a row of plants may namely be absent in the field and the element must then be switched off or taken out.

Instead of a diabolo roller 4, use can be made of a height sensor, for instance attached to the first yoke 6, with which (via a control unit) the cylinder 8 can be operated to control the height of the first yoke 6 and consequently of the discs 17, slide plates 14 and the parts 12 and 13.

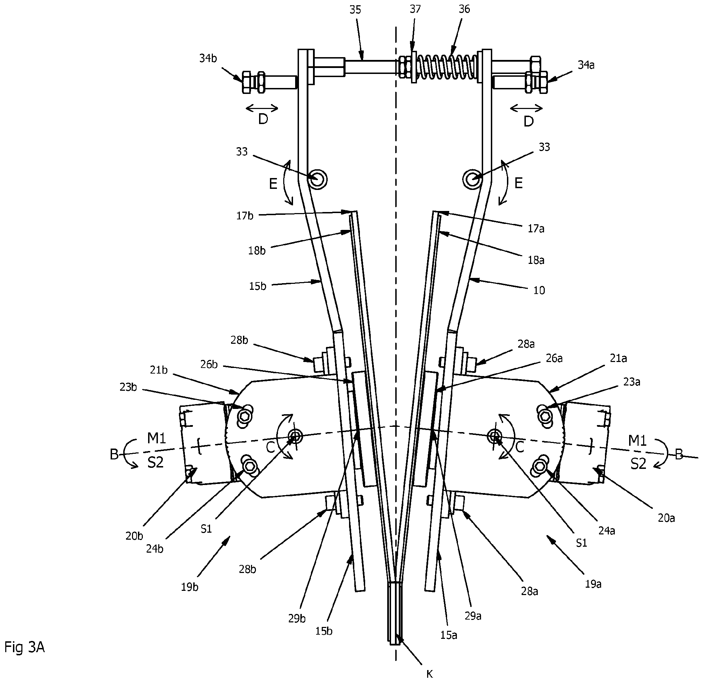

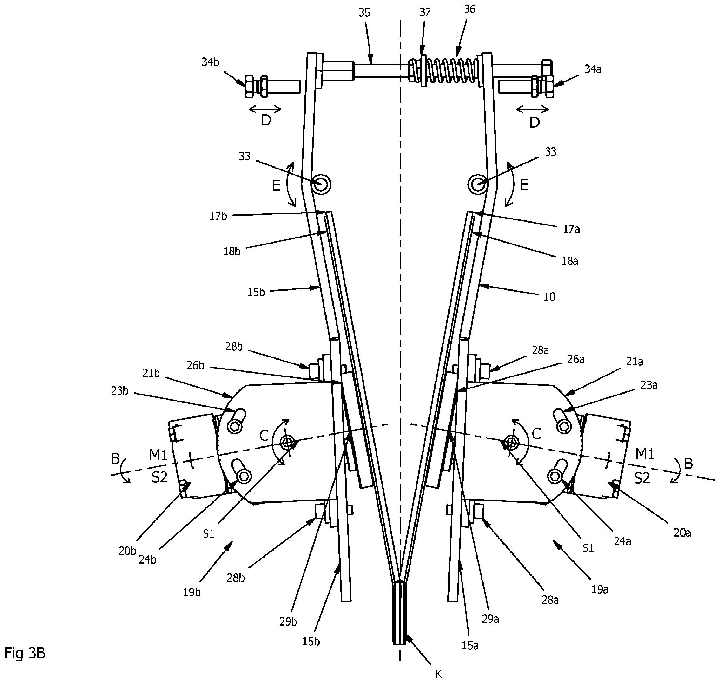

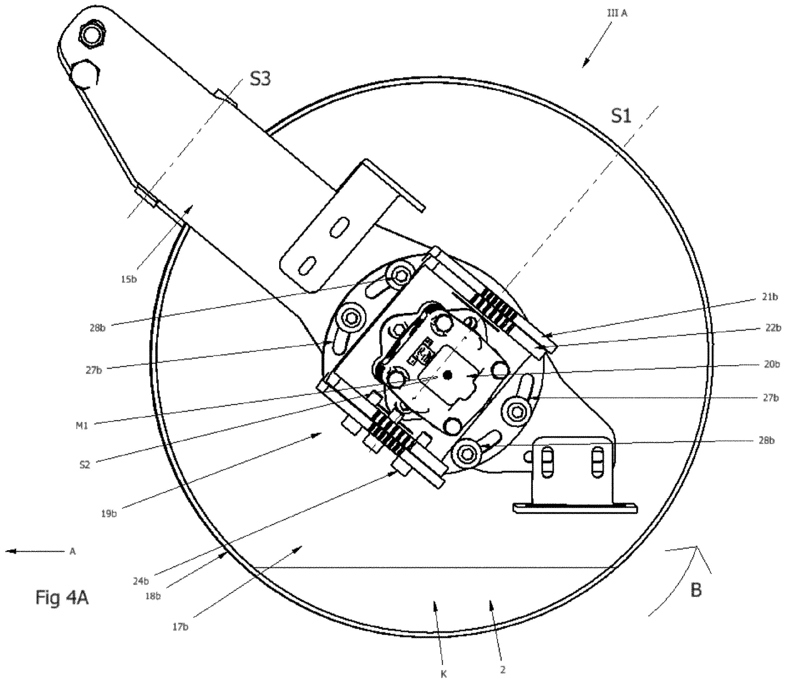

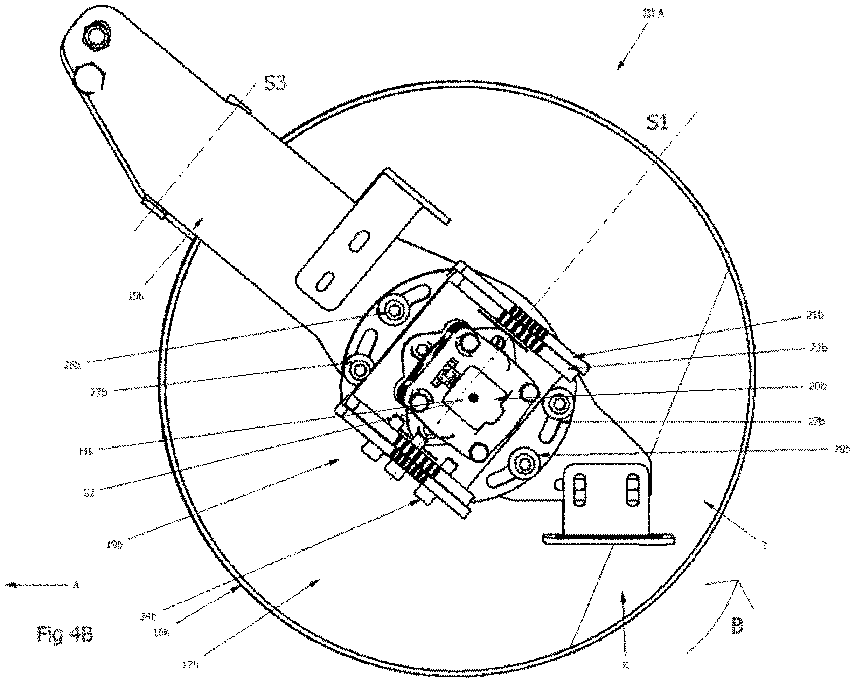

Figures 3A and 3B show disc holders 19a, 19b arranged on the fork arms 15a, 15b. In Figure 2A they are shown as shielded by casings. The disc holders 19a, 19b comprise motors 20a, 20b, in this example hydraulic motors - please note, these may also be electric motors - the drive shafts 29a, 29b of which rotatively drive disc hubs 26a, 26b of discs 17a, 17b in the directions B, around disc centre lines M1. The drive shafts extend through spacious passages in the fork arms 15a, 15b. The disc holders 19a, 19b further comprise first U-shaped motor supports 21a, 21b that are attached to the exterior surfaces of fork arms 15a, 15b by means of bolts 28a, 28b, as will also be discussed below in the discussion of Figures 4A and 4B. Second motor supports 22a, 22b, on which the motors 20a, 20b have been attached, and which are rotatable in directions C around first adjustment centre line S1, are provided within the U-shaped first motor supports 21a, 21b.

The discs 17a, 17b comprise substantially flat outer disc parts that can be resiliently bowed away from their main plane and they have circumferential edges 18a, 18b. In Figure 3A the discs are held in such a manner as to be situated flat against each other in an edge area or contact area K. Depending on the distortion of the disc, the largest radial dimension of the contact area can be in the range of approximately 40 mm - 100 mm. The discs 17a, 17b may each further comprise a rubber coating arranged at the disc part sides that face each other. This rubber layer, forming an inner disc part, can extend radially beyond the circumferential edge of the disc parts to prevent the haulm for breaking off or being cut through and the haulm-topping process not being optimal.

By loosening bolts 24a, 24b that extend in curved slotted holes 23a, 23b, the second motor support 22a, 22b can be rotated relative to the first motor support 21a, 21b, in directions C around adjustment centre lines S1 at an angle that is limited by the slotted holes 23a, 23b that are centred relative to S1. By means of these first adjustment means, the angle between the disc centre line M1 and the centre line S2 of the first motor support 21a, 21b, as well as the angle between both disc centre lines M1, is set (the angle is zero in this example of Figure 3A). This is illustrated in Figures 3A and 3B, in which it can be seen that in Figure 3B the angle between the discs 17a, 17b is enlarged and the contact area K is enlarged. Tilting the second motor supports 22a, 22b relative to the first motor supports 21a, 21b and consequently relative to the fork arms 15a, 15b is possible due to the spacious passages in the fork arms 15a, 15b for the drive shafts 29a, 29b. The first adjustment means can be furnished for adjustment around the first adjustment centre lines in a range of 0 +/-10 degrees.

A second adjustment option by means of second adjustment means is shown in Figures 4A and 4B. It can be seen that the depicted first motor support 21b (the same applies to the other side) is attached to the fork arm 15b by means of a number of bolt connections. The bolt connections comprise bolts 28b that are fixedly attached to the fork arm 15b. The first motor support is provided with a number of curved slotted holes 27b that are centred relative to the second adjustment centre line S2. By loosening the bolts 28b, the first motor support 21b can be rotated, in the direction F, around the second adjustment centre line S2, from the position of Figure 4A into for instance the position of Figure 4B. The bolts can then be tightened once more. The contact area K will be moved due to this action, from the position of Figure 4A, in which the centre of gravity Z of that area is situated behind the lowest point of the circumferential edge 18b, into a position in which the entire area K is situated behind that lowest point. The second adjustment means can be furnished for adjustment around the second adjustment centre lines in a range of 0 +/- 30 degrees.

The second adjustment means can therefore have a range from the centre position of approximately 30 degrees clockwise (to the right) and approximately 30 degree anticlockwise (to the left). The setting is not always exactly around the first adjustment centre line of the motor. If the first adjustment means have been adjusted such that the centre line of the motor is no longer at a right angle to the mounting surface of the fork arms 15, then the adjustment is not exactly at the centre line of the motor axis.

A third adjustment option is schematically shown in Figure 3A, in which the device is shown in its default setting. The fork arms 15a, 15b are rotatable, in the directions E, around hinges 33 that are fixed with the fork 15. The fixed hinges define third adjustment centre lines S3. The ends that face away from the discs can be moved towards or away from each other along a limited distance by means of adjustment bolts 34a, 34b. In that way, the distance of the fork arms 15a, 15b to one another can be set at the level of the discs and consequently also how far the contact area extends in the centripetal direction. By way of example: the angle at which each fork arm 15a, 15b can be set around S3 by the third adjustment means can be +/-10 degrees.

The rotation centre line S3 of the fork arms is parallel to the surface at the exterior side of the fork arm against which the first motor support is attached.

It is advantageous that the mounting surfaces converge relative to each other because in that case the motor supports will not need to be rotated as much around S1. In the example of this embodiment the mounting surfaces of the fork arms converge such that in the basic setting of S1 the motor supports are exactly in the centre position.

By using the first and second adjustment means for setting purposes, the measure of biasing with which both discs press against each other in the contact area, as well as the location at which they do, can be set. By this, tuning to the actual situation and condition of the crop to be treated can take place. With the three types of adjustment means, the location of the contact area of the discs in a circumferential sense and the radial dimension and consequently the size of the contact area can be set. The higher the tension, the more the discs are distorted and consequently the larger the contact area is. The three types of adjustment means can all be used then, or two of them or one of them can be used. This offers the user a large range of setting options to achieve the best possible tuning to the specific conditions (crop, soil).

When the discs are at a large angle to each other due to the setting of the first and second adjustment means, the contact area will usually become smaller. However, when a relatively large pressure is exerted on the discs by the third adjustment means, the contact area will be large nonetheless. Conversely, if the discs are at a small angle to each other due to the setting of the first and second adjustment means, but at the same time only little pressure is exerted on the discs by the third adjustment means, then the discs will distort only a little resulting in the contact area being small nonetheless.

In order to prevent damage to the discs 17a, 17b, from stones or other hard objects lying on the bed or the ridge and that may get caught between the discs, an evasion safeguard is provided between both fork arms, by means of a bolt 35 including spring 36 and stop 37. When a stone ends up between the discs, the fork arms 15a, 15b can move apart counter to the spring 36, in order to move back towards each other as in the initial position once the stone has been released. The slide plates follow the evasive moment of the fork arms.

While operative, when the haulm-topping unit 1 is propelled in the direction A along a ridge of haulm of for instance potatoes lying in the ridge, the haulm, i.e. foliage and stems, is clamped between both discs that are biased towards each other, in the contact area K. By rotating the position of the clamping surface, it can be set whether the haulm is topped horizontally or vertically. The rotation speed of the discs relative to the speed of travel also influences the direction of topping.

The angle between the discs can also be adjusted, this changes the clamping force and the size of the contact area K. Furthermore, the angle between the fork arms can be set, by which the clamping force of the discs can also be adjusted.

An advantage here is that the haulm can be clamped at the ultimate tip of the discs. As a result the depth of the discs can be set to be neatly above the ground. This way, the discs will not plough through the soil and the haulm is clamped as low as possible where the haulm is less likely to break (the haulm being strongest just above the ground). As the haulm is clamped between the discs and is subsequently topped, the root below the haulm does not need to pass between the discs. This is different from the known art, such as publication NL-99872, in which the haulm is pulled up root and all, in the process of which soil is always and sometimes stones as well are pulled up.

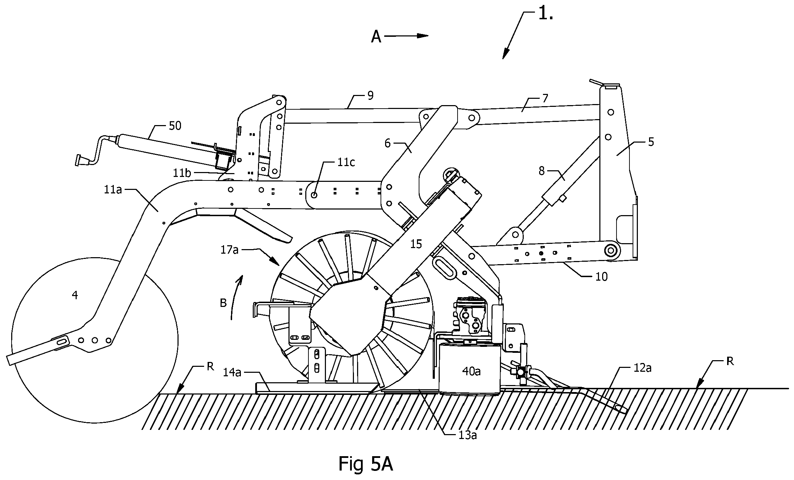

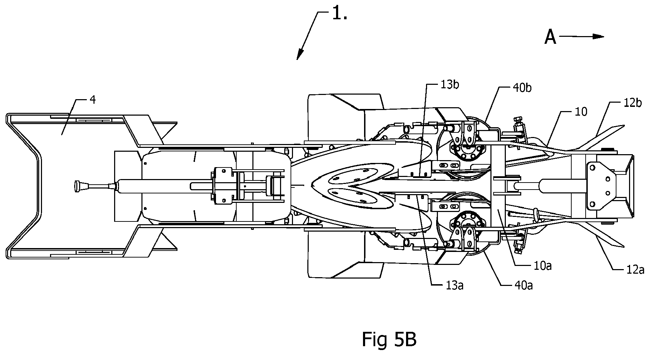

The haulm-topping unit 1 of Figures 5A-C can, together with a number of identical haulm-topping units positioned adjacent thereto, be attached to a joint frame that is be attached to a vehicle, such as a tractor, by means of a suspension.

Each haulm-topping unit 1 comprises a support roller 4 situated at the rear, which roller is diabolo-shaped in this example in order to rollingly support on a field ridge or crop ridge R on which the crop grows. The support roller 4 is rotatably attached to two L-shaped arms 11a, that are connected to each other by a cross beam 11b and at the location of 11c are rotatably connected to a first yoke 6. A top bar 9 is arranged between the first yoke 6 and the cross beam 11b. By means of a spindle 50, the height of the support roller 4 can be set relative to the first yoke 6.

The first yoke 6 is suspended from a second yoke 5, that is stationarily attached to the frame 2. The first yoke 6 and the second yoke 5 are rotatably connected to each other, by means of two arms 10 and by means of an adjustment bar 7, forming a parallelogram that can be distorted in the vertical plane. A cylinder 8 extends diagonally through the parallelogram and with its ends is attached on the one side to the second yoke 5 and, on the other side, to a cross beam 10a that extends between the arms 10, near the first yoke 6. The cylinder 8 can be used to influence the shape of the parallelogram, in particular the height of the first yoke 6 relative to the ridge R.

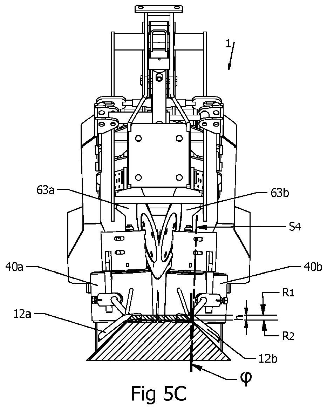

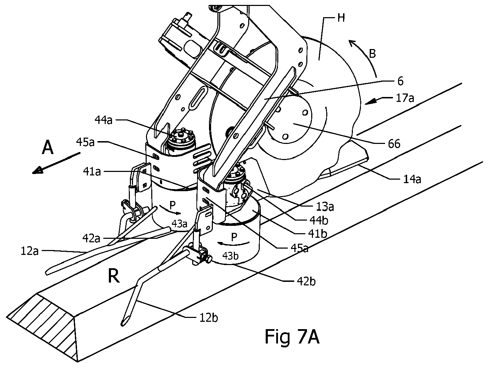

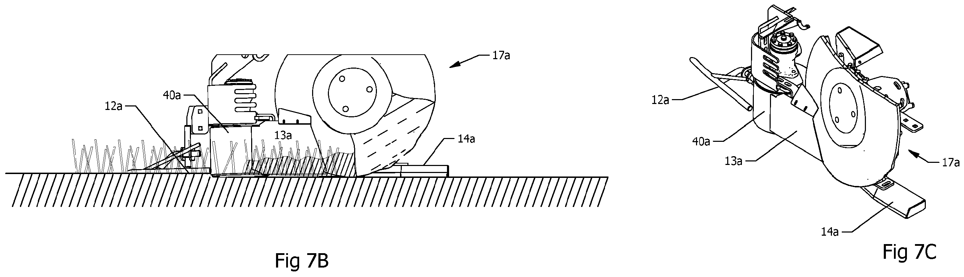

Several parts are attached to the first yoke 6. First of all the so-called torpedoes 12 that are positioned to move along the sides of the ridge and which serve to guide haulm that extends sideward from the ridge, towards the centre. Input rollers 40a, 40b are positioned behind the torpedoes 12, further to be seen in Figure 5C and Figure 7A. Behind it, stem/foliage guide plates 13 are positioned, which ensure further centring guidance of the stem and the foliage towards the centre.

Further, a fork structure 15 with fork arms 15a, 15b is suspended from the first yoke 6. The fork 15 is rotatably attached to the first yoke 6.

Slide plates 14 are attached to the fork structure 15, in particular to the fork arms 15a, 15b, which slide plates when in use, are kept at the ground level or just above it for stopping soil and any tuberous plant in it when the stem is pulled out of the soil, so that the tuberous plant remains in the ridge.

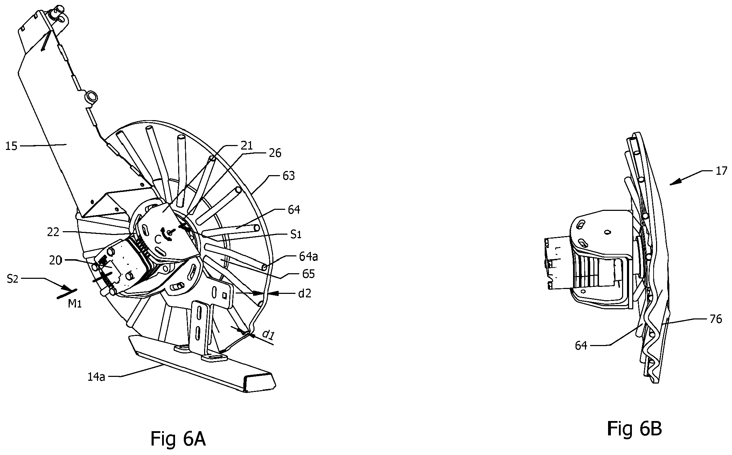

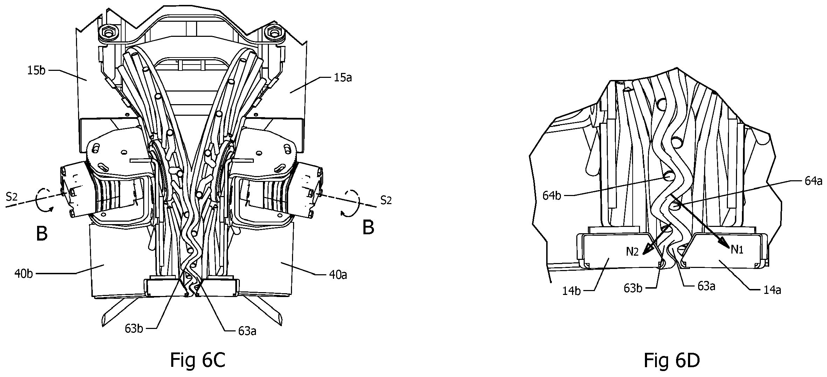

Disc holders, shielded by casings, are arranged at the outer ends of the fork arms 15a, 15b in a manner similar to that of the first example of an embodiment. The disc holders 19 - also see Figure 6A in which one of the disc assemblies is depicted - with numbering without an indication of the side of the device, comprise motors 20, in this example hydraulic motors or electric motors, of which the drive shafts rotatively drive disc hubs 26 of discs 17 in the directions B, around disc centre lines M1. The drive shafts extend through spacious passages in the fork arms 15a, 15b. The disc holders 19 further comprise first U-shaped motor supports 21. Second motor supports 22, on which the motors 20 have been attached, and which are rotatable in directions C around first adjustment centre line S1, are provided within the U-shaped first motor supports 21.

The discs 17 are assemblies and, unlike the first example of an embodiment, comprise an outer disc part having a disc hub 26 and a disc hub flange 65 attached thereto. A series of pins 64, for instance made of steel, situated in radial planes, are fixedly attached to the disc hub flange 65. The pins 64 have outer ends 64a, which lie on a circle. The outer ends 64a have a thickness d1. The distances in a circumferential sense between the pins 64 among themselves, are preferably the same. The pins 64 extend freely from the disc hub flange 65.

The discs 17 further comprise an inner disc part 63 made of a rubbery material. The disc part 63 has an uninterrupted circular outer edge 63a having a thickness d2. The disc part 63 is attached to the disc hub flange 65 by a plate 66 and bolts. But the pins 64 and the disc part 63 are not attached to each other radially beyond the flange 65. The resistance against bending in radial planes for the pins 64 is much greater than that of the disc part 63. The pins 64 can have flexural stiffness, or be slightly resilient.

The pins 64 lie on a cone surface, the exterior side of which faces the other disc. The cone surface may be at an angle of preferably between zero and 30 degrees, and more preferably 10 degrees, to a plane perpendicular to the rotation centre line of the disc hub. As a result, a somewhat even engagement can be achieved in a radial direction despite the inclined position of the disc hubs. The inner disc parts 63 have a truncated conical main surface H that follows the cone formed by the pins 64. This way an advantageous input opening for the stem with foliage is provided.

The thickness d1 of the pins 64 may be in a range of approximately 1 to 3 cm. The thickness of the disc element 63 can be in the range of 0.5 - 1.5 cm. The mutual angle of the centre lines of the hubs 26 that can be set, may advantageously be between 25 and 45 degrees.

In the device 1, the discs 17a, 17b are mounted such, that in a circumferential direction the pins 64a of disc 17a are situated so as to be offset by half a pitch from the pins 64b of disc 17b. This way it is possible to bring the trajectory of the pins of the one disc close to (less than 2 x 2d) the trajectory of the pins of the other disc, as can be seen in Figures 6B and 6C. The horizontal distance between the pins 64 can be thus that the inner disc parts are distorted as a result into an undulating or zig-zagging course, as seen in a circumferential direction. The inner disc parts 63a, 63b are then pressed against each other according to elongated, radial strips 76, whereby the normals N1 and N2 have a tangential directional component. Due to the stiffness of the inner disc parts they are also pressed against each other between the pins. After all, due to their elasticity, the inner disc parts will tend to take on their initial shape - a flat shape or a conical shape - of their own accord. Several strips 76 together form a contact area, where a stem including foliage can be grasped and clamped to be pulled out of the ridge R upon onward rotation of the discs 17. The slide plates 14 thereby prevent that roots and soil are pulled along. The height of the slide plates relative to the fork arms and consequently the height of the discs 17a, 17b relative to the ground can be set.

In Figures 7A-C another aspect of the invention is shown, with a pair of input rollers 40a, 40b positioned on either side of the device 1. The input rollers 40a, 40b are suspended from downwardly extending frame parts 45a, 45b that are part of the first yoke 6. The input rollers 40a, 40 are each straight circular cylindrical, with the upper plate 41a, 41b, lower plate 42a, 42b and casing 43a, 43b made of a material that for instance is rubbery. Alternatively, a smooth material, such as steel, may be advantageous to allow for slippage between stem/foliage and the rotating casing, so that the stem can remain upright as much as possible. Hydraulic motors 44a, 44b drive the input rollers 40a, 40b in the indicated directions P, around centre lines S4. The number of revolutions can be set, in one embodiment in a range of 0.5 -1.5 times the speed of the device 1 in the working direction.

The angle ϕ (Figure 5C) of each centre line S4 to the vertical, in a plane transverse to the working direction A, can be set, as can be the mutual distance in a horizontal direction of both input rollers 40a, 40b. With this, the shape and size of the gap space between the input rollers 40a, 40b can be adjusted to the situation. In the example shown, the angle ϕ opens upwards, so that the gap space increases upwardly in width.

The input rollers 40a, 40b can fulfil a number of functions. First of all, they can be used to lower the height of the field at the location of the stem, see Figure 6C, because they displace soil on either side of the stem on the ridge towards the inside and as it were shave the ridge from level R1 to level R2 (Figure 5C). As described above, this exposes a lower section of the stem to be engaged by the trailing discs, which reduces the risk of the stem breaking and may increase the grip the discs have on the stem.

It is furthermore advantageous that the input rollers 40a, 40b achieve a flat top surface of the ridge R, which is beneficial to the operation of the pressure roller 4 that is active at the end of the device 1. Once the device 1 has passed along the ridge R, it will have a to a high degree evenly packed profile with a to a high degree regular top height.

Secondly, the input rollers are able to urge a stem which, at the location where it projects from the ground, is situated beside the centre line of the operational device 1, more towards that centre line, which process is enhanced by the inward rotation of the respective input roller that engages the stem. Secondly, the input rollers have an uprighting effect on the (relatively) incoming stems for which the straight circular cylinder shape is advantageous. Due to the gently widening shape of the gap space between the input rollers, space is provided to the foliage at the stem.

The soil engaged by the input rollers, and compacted by the rollers is discharged rearward, between the rollers to the space between the guide plates 13a, 13b, that are almost contiguous with the input rollers and that continue to between the discs 17a, 17b. The space between the guide plates is slightly divergent upwardly and rearwardly, so that the soil passing through the input rollers is prevented from accumulating or becoming lumpy. At the end, the stem including foliage is engaged by the discs 17a, 17b and released towards the rear/upwards together with the soil that has ended up between the discs.

The invention provides a device for removing stems and foliage from a crop in a field, comprising:
- a main frame to be propelled in a working direction along and across the field, and
- at least one haulm-topping unit held by the main frame,
wherein the haulm-topping unit comprises a pair of cooperating discs, each defining a main plane and each being able to bow away from its main plane, and a pair of disc holders for holding the discs, wherein the disc holders comprise disc drives for rotating the discs in a same sense around their respective disc centre lines, wherein at their trailing edge the discs rotate upwardly, wherein the discs of the pair of discs converge towards each other in a downward direction in a vertical plane transverse to the working direction, wherein the discs of the pair of discs converge towards each other in a horizontal plane in a direction that is opposite to the working direction, and wherein the haulm-topping unit comprises settable biasing means for biasing the discs against each other under distortion thereof, to form a contact area at the radial inside of the circumferential edge.

The invention further provides a device as described above wherein the biasing means comprise first adjustment means for setting the angle between the disc centre lines of both discs, as seen in a first plane comprising both disc centre lines. The first adjustment means can be operative around respective first adjustment centre lines that intersect the respective disc centre lines perpendicularly. The first adjustment centre lines can have a horizontal and a vertical directional component, which directional components can have a ratio of between 1:2 and 2:1 The disc holders can be arranged in such a manner in the haulm-topping unit that the surface centre of gravity of the contact area is situated behind the lowest point of the discs. The biasing means can comprise second adjustment means for setting the location of the contact area on the rotor surface of the discs The second adjustment means can be furnished with an adjustment range that allows for the contact area to be situated entirely behind the lowest point of the discs. The second adjustment means can be furnished with an adjustment range that allows for the contact area to be situated entirely in the lower halves of the discs. The second adjustment means can be furnished for setting the angle of the first plane that comprises the disc centre lines relative to the working direction. The second adjustment means can be operative for setting the disc holders around respective second adjustment centre lines that are perpendicular to the respective first adjustment centre lines. The second adjustment centre lines in the first plane are settable at an angle relative to the respective disc centre lines in an angle range of between 0 +/- 30 degrees. The biasing means can comprise third adjustment means for setting the horizontal distance between the centres of the discs. The third adjustment means can be adjustable around respective third adjustment centre lines that are situated outside the discs.

The haulm-topping unit can comprise a fork, wherein the disc holders are arranged on the arms of the fork. The disc holders can comprise a main support and an auxiliary support, wherein the auxiliary support is situated between the motor and the main support and can be set relative thereto around the first adjustment centre line by the first adjustment means. The angular position of the main support can be set relative to the respective arm by the second adjustment means. The arms of the fork can converge in a downward direction and/or in a direction opposite to the working direction. The third adjustment means can be configured for setting the distance between the fork arms at the location of the discs. The third adjustment means can comprise spring means that allow for a spring-cushioned divergence of the fork arms relative to each other. The third adjustment centre line can be transverse to the fork arm, as seen in a vertical plane of projection that comprises the working direction.

The invention also provides a device as described above, wherein the discs each are assemblies of an inner disc part of a relatively resilient and/or elastic material, such as for instance a rubber, for direct contact with stem and foliage, and an outer disc part that has more flexural stiffness than the inner disc part of resilient and/or elastic material. The discs can each comprise an outer disc part that forms a flat surface made of resiliently bendable material, such as steel, wherein the disc part has a circumambulating circumferential edge. The discs can comprise an outer disc part having a disc hub and a number of pins extending from the hub towards the disc edge, wherein the discs further each comprise an inner disc part situated at the disc sides that face each other, wherein the flexural stiffness of the pins exceeds that of the inner disc part, wherein the pins are arranged so as to be regularly distributed in a circumferential sense, having an interstitial space between the consecutive pins, wherein the pins have free radial ends, wherein the pins of both discs can cooperate to distort the inner disc parts in the contact area between them. The biasing means can be furnished for setting the relative positions of the disc hubs in a circumferential sense and consequently of the pins of the one disc relative to the pins of the other disc. The outer disc parts can be arranged so as to be offset in a circumferential sense, in such a manner that the pins of the one disc part extend adjacent to interstitial spaces between the pins of the other disc part, as seen in a vertical plane of projection that comprises the working direction, wherein, preferably the pins of the one disc part extend in a centre plane of the interstitial space between the two adjacent pins of the other disc part. The pins can be situated on a cone surface, in particular a truncated conical surface, of which the exterior side faces the other disc.

The invention further provides a method for removing stems and foliage from a crop in a field, comprising:
- propelling a haulm-topping device, according to an embodiment of a haulm-topping device as described above, in a working direction along and across the field, wherein the discs each are assemblies of an inner disc part made of a relatively resilient and/or elastic material, such as for instance a rubber, for direct contact with stem and foliage, and an outer disc part that has more flexural stiffness than the inner disc part made of resilient and/or elastic material, wherein the haulm-topping device comprises:
- a main frame and at least one haulm-topping unit held by the main frame,
wherein the haulm-topping unit comprises a pair of cooperating discs, each defining a main plane and each being able to bow away from its main plane, and a pair of disc holders for holding the discs, wherein during propulsion of the haulm-topping device, the discs are rotated in a same sense around respective disc centre lines, wherein at their trailing edge the discs rotate upwardly, wherein the discs in a direction with of the pair of discs converge towards each other in a downward direction in a vertical plane transverse to the working direction, wherein the discs of the pair of discs converge towards each other in a horizontal plane in a direction that is opposite to the working direction, and wherein during propulsion of the haulm-topping device, the discs are biased against each other under distortion thereof, to form a contact area at the circumferential edge, wherein during propulsion of the haulm-topping device, a lower section of the stem with foliage is allowed to enter in the space between the discs and subsequently allowed to be engaged and clamped by both discs in the contact area and is allowed to be pulled away from the field by the discs, wherein, preferably, a device according to the description in paragraph [0124] is used as haulm-topping device.

In the method, the angle between the disc centre lines of both discs, as seen in a first plane that comprises both disc centre lines, can be set using first adjustment means provided on the haulm-topping device, wherein, preferably, the angle is set using the first adjustment means around respective first adjustment centre lines that intersect the respective disc centre lines perpendicularly, wherein, preferably, the location of the contact area on the rotor surface of the discs is set using second adjustment means provided on the haulm-topping device, wherein, preferably, the location of the contact area is set using the second adjustment means so that the contact area is situated entirely behind the lowest point of the discs, wherein, preferably, the location of the contact area is set using the second adjustment means so that the contact area is situated entirely in the lower halves of the discs, wherein, preferably, the angle of the first plane that comprises the disc centre lines is set relative to the working direction using the second adjustment means, wherein, preferably the disc holders are set around respective second adjustment centre lines that are perpendicular to the respective first adjustment centre lines using the second adjustment means. Also, during propulsion of the haulm-topping device, the surface centre of gravity of the contact area can be kept behind the lowest point of the discs and/or wherein during propulsion of the haulm-topping device, the surface centre of gravity of the contact area is kept below the disc centre lines, in particular at a height of 0.5R - R below the disc centre lines, wherein R is the radius of the discs in an unloaded condition. The outer edges of the discs can then also be kept on or below the initial top of the field or crop ridge/field ridge it had prior to the haulm-topping device being operational on the field ridge.

The invention also provides a device for removing stems and foliage from a crop in a field, comprising:
- a main frame to be propelled in a working direction along and across the field, and
- at least one haulm-topping unit held by the main frame,
wherein the haulm-topping unit comprises a pair of cooperating discs, and a pair of disc holders for holding the discs, wherein the disc holders comprise disc drives for rotating the discs in a same sense around respective disc centre lines, wherein at their trailing edge the discs rotate upwardly, wherein the discs can be set so that they converge in a horizontally rearward direction and/or in a vertically downward direction, wherein the haulm-topping unit comprises settable biasing means for biasing the discs against each other under distortion thereof, to form a contact area at the radial inside of the circumferential edge with which contact area the stem and foliage can be clamped for their removal from the field.

The invention further provides a device as described above wherein the discs have a disc hub and a number of elastic pins extending from the hub towards the disc edge, wherein the discs further each comprise an inner disc part situated at the disc sides that face each other, wherein the flexural stiffness of the pins exceeds that of the inner disc parts, wherein the pins are arranged so as to be regularly distributed in a circumferential sense, having an interstitial space between the consecutive pins, wherein the pins have free radial ends, wherein the biasing means are furnished for setting the relative positions of the disc hubs in a circumferential sense and consequently of the pins of the one disc relative to the pins of the other disc, and wherein the pins of both discs can cooperate to distort the inner disc parts in the contact area between them.

The inner disc parts can be made of a rubbery material. The pins can be radially oriented. The discs can be arranged so as to be offset or staggered in a circumferential sense, in such a manner that the pins of the one disc extend adjacent to interstitial spaces between the pins of the other disc, as seen in a vertical plane of projection that comprises the working direction. The pins of the one disc can extend in a centre plane of the interstitial space between the two adjacent pins of the other disc. The biasing means can be furnished to allow the inner disc parts to distort as radial mountains and valleys at the location of the contact area by means of the pins, wherein the mountains of the one disc engage with the valleys of the other disc and vice versa. The biasing means can be furnished for keeping the outer ends of the pins of both discs at a horizontal distance from each other at the location of the contact area, with the distance being smaller than the thickness of the inner disc element at that location in an unloaded condition. The inner disc parts can show an undulating course in a circumferential sense at the location of the contact area at the edge of the disc. The inner disc parts can extend radially from the outer ends of the pins. The discs of the pair of discs can converge towards each other in a downward direction in a vertical plane transverse to the working direction. The discs of the pair of discs can converge towards each other in a horizontal plane in a direction that is opposite to the working direction. The pins can be situated on a cone surface, in particular a truncated conical surface, of which the exterior side faces the other disc. The inner disc parts can have a shape with a truncated conical or conical circumferential portion that follows the cone formed by the pins. The inner disc parts can be flat.

A device according to the invention can be provided with a soil displacer arranged in front of the discs in a working direction, for displacing soil in the vicinity of the stem where it projects out of the field. The soil displacer can comprise a pair of rollers arranged on the main frame, in particular circular cylindrical rollers, in particular straight circular cylindrical rollers, which are arranged next to each other on the main frame, and which are kept apart from each other at an interval using the circumferential surfaces to form a narrow interstitial space, and a roller drive for rotating the rollers around substantially upright rotation centre lines, in such a manner as to rotate in the interstitial space in a direction opposite to the direction of travel. The rollers can converge in a downward direction with their rotation centre lines, as seen in a vertical plane transverse to the direction of travel, in particular converge at a contained angle of less than 10 degrees. The rotational speed of the drive of the rollers can be set, in one embodiment for instance between 0.5 -1.5 times the speed of the device in the working direction. The rollers can be positioned for engaging a stem.

The invention further provides a method of using a device according to the invention. A method for removing stems and foliage from a crop in a field, may comprise:
- propelling a haulm-topping device in a working direction along and across the field, wherein the haulm-topping device comprises:
- a main frame and at least one haulm-topping unit held by the main frame,
wherein the haulm-topping unit comprises a pair of cooperating discs, each defining a main plane and each being able to bow away from its main plane, wherein during propulsion of the haulm-topping device, the discs are rotated in a same sense around respective disc centre lines, wherein at their trailing edge the discs rotate upwardly,
wherein the discs in a direction with of the pair of discs converge towards each other in a downward direction in a vertical plane transverse to the working direction,
wherein the discs of the pair of discs converge towards each other in a horizontal plane in a direction that is opposite to the working direction and
wherein during propulsion of the haulm-topping device, the discs are biased against each other under distortion thereof, to form a contact area at the circumferential edge,
wherein during propulsion of the haulm-topping device, a lower section of the stem with foliage is allowed to enter in the space between the discs and subsequently allowed to be engaged and clamped by both discs in the contact area and allowed to be pulled away from the field by the discs.

In a method using a device according to the invention, use can be made of discs having a disc hub and a number of pins extending from the hub towards the disc edge, wherein the discs further each comprise a disc-shaped disc element situated at the disc sides that face each other, wherein the flexural stiffness of the pins exceeds that of the inner disc parts, wherein the pins are arranged so as to be regularly distributed in a circumferential sense, having an interstitial space between the consecutive pins, wherein the pins have free outer ends, wherein the discs have been arranged so as to be offset in a circumferential sense, in such a manner that the pins of the one disc extend in interstitial spaces between the pins of the other disc, as seen in a vertical plane of projection that comprises the working direction, and wherein the pins bias the inner disc parts against each other in the contact area.

In a method according to the invention, the pins are able to distort the inner disc parts to such an extent that the contact area comprises partial surfaces that have a normal with a directional component that is oriented in the tangential direction of the discs. At the location of the contact area, the pins can thereby distort the inner disc parts into radial mountains and valleys, wherein the mountains of the one disc engage with the valleys of the other disc and vice versa. The inner disc parts can thereby show an undulating course in a circumferential sense at the location of the contact area at the edge of the disc,. The contact area can thereby comprise elongated radial partial contact areas, each time situated between two pins of the respective discs.

In a method according to the invention, when the device is operational, the edges of the discs can be kept below the initial (that is to say, in the condition prior to the passage of the haulm-topping unit) top of a field, field ridge or crop ridge, which field or ridge has the top prior to the operation of the haulm-topping device on the field ridge, and the stem is clamped by the discs in the contact area, at least in a stem section that is located below said initial top. Prior to the stem including foliage being engaged by the discs, the top of the field or field ridge can thereby be lowered by displacing the soil at that location. The soil can thereby be displaced using a pair of rollers arranged on the device, in particular straight circular cylindrical rollers, which are arranged next to each other and which are kept apart from each other at an interval using the circumferential surfaces to form a narrow interstitial space, wherein the rollers are driven around substantially upright rotation centre lines, so that they rotate in the interstitial space in a direction opposite to the direction of travel. The rollers can thereby be kept such that their rotation centre lines converge in a downward direction, as seen in a vertical plane transverse to the direction of travel. Prior to a stem including foliage being engaged by the discs, in case the stem projects from the soil at a location that is spaced apart sideward from the centre line of the operational haulm-topping unit, the stem, where it projects from the soil, can be urged towards the centre line using the haulm-topping unit. Urging the stem towards the centre line can then be carried out by means of one of a pair of rollers arranged on the main frame, in particular straight circular cylindrical rollers, which are arranged next to each other on the main frame, and which are kept apart from each other at an interval using the circumferential surfaces to form a narrow interstitial space for passage of the centred stem, wherein the rollers are driven around substantially upright rotation centre lines, so that they rotate in the interstitial space in a direction that is opposite to the direction of travel. Prior to the stem including foliage being engaged by the discs, the stem can be oriented substantially vertically with the used haulm-topping unit. Orienting the stem can then be carried out by means of a pair of rollers arranged on the main frame, in particular straight circular cylindrical rollers, which are arranged next to each other on the main frame, and which are kept apart from each other at an interval using the circumferential surfaces to form a narrow interstitial space for passage of the stem, wherein the rollers are driven around substantially upright rotation centre lines, so that they rotate in the interstitial space in a direction that is opposite to the direction of travel. The rollers can then be kept such that their rotation centre lines converge in a downward direction, as seen in a vertical plane transverse to the direction of travel. The rollers with which the top of the field ridge is lowered can then also be used as centring rollers and as orienting rollers for the stem.

The invention is not at all limited to the embodiments described in the description and shown in the drawings. The above description has been included to illustrate the operation of preferred embodiments of the invention and not to limit the scope of the invention. Starting from the above explanation, many variations that fall within the spirit and scope of the present invention will be evident to a person skilled in the art. Variations of the parts described in the description and shown in the drawings are possible. They can be used separately in other embodiments of the invention. Components of the various examples given can be combined together.

## Claims

1. Device (100) for removing stems and foliage from a crop in a field, comprising:
- a main frame to be propelled in a working direction (A) along and across the field, and
- at least one haulm-topping unit (1) held by the main frame,
wherein the haulm-topping unit (1) comprises a pair of cooperating discs (17a, 17b), each defining a main plane and each being able to bow away from its main plane, and a pair of disc holders (19a, 19b) for holding the discs,
wherein the disc holders (19a, 19b) comprise disc drives for rotating the discs (17a, 17b) in a same sense around their respective disc centre lines, wherein at their trailing edge the discs rotate upwardly,
wherein the discs of the pair of discs converge towards each other in a downward direction in a vertical plane transverse to the working direction,
wherein the discs of the pair of discs converge towards each other in a horizontal plane in a direction that is opposite to the working direction, and
wherein the haulm-topping unit comprises settable biasing means (21, 22, 23, 24, 27, 28, 33, 34, 35, 36, 37) for biasing the discs against each other under distortion thereof, to form a contact area (K) at the radial inside of the circumferential edge.

2. Device according to claim 1, wherein the biasing means comprise first adjustment means (22a, 22b, 23a, 23b, 24a, 24b) for setting the angle between the disc centre lines of both discs, as seen in a first plane comprising both disc centre lines, wherein, preferably, the first adjustment means are operative around respective first adjustment centre lines that intersect the respective disc centre lines perpendicularly, wherein, preferably, the first adjustment centre lines have a horizontal and a vertical directional component, which directional components have a ratio of between 1:2 and 2:1.

3. Device according to any one of the preceding claims, wherein the disc holders (19a, 19b) have been arranged in such a manner in the haulm-topping unit (1) that the surface centre of gravity of the contact area is situated behind the lowest point of the discs, wherein, preferably, the biasing means comprise second adjustment means (27a, 27b, 28a, 28b) for setting the location of the contact area (K) on the rotor surface of the discs, wherein, preferably, the second adjustment means are furnished with an adjustment range that allows for the contact area to be situated entirely behind the lowest point of the discs, wherein, preferably, the second adjustment means are furnished with an adjustment range that allows for the contact area to be situated entirely in the lower halves of the discs, wherein, preferably, the second adjustment means are furnished for setting the angle of the first plane that comprises the disc centre lines relative to the working direction, wherein, preferably, the second adjustment means are operative for setting the disc holders (19a, 19b) around respective second adjustment centre lines that are perpendicular to the respective first adjustment centre lines, wherein, preferably, the second adjustment centre lines in the first plane are settable at an angle relative to the respective disc centre lines in an angle range of between 0 +/- 30 degrees.

4. Device according to any one of the preceding claims, wherein the biasing means comprise third adjustment means (33, 34) for setting the horizontal distance between the centres of the discs, wherein, preferably, the third adjustment means are adjustable around respective third adjustment centre lines that are situated outside the discs.

5. Device according to any one of the preceding claims, wherein the haulm-topping unit comprises a fork (15), wherein the disc holders are arranged on the arms (15a, 15b) of the fork, wherein, preferably, the disc holders comprise a main support and an auxiliary support, wherein the auxiliary support is situated between the motor and the main support and can be set relative thereto around the first adjustment centre line by the first adjustment means, wherein, preferably, the angular position of the main support can be set relative to the respective arm by the second adjustment means, wherein, preferably, the arms of the fork converge in a downward direction and/or in a direction opposite to the working direction.

6. Device according to claim 4 and according to claim 5, wherein the third adjustment means are configured for setting the distance between the fork arms at the location of the discs, wherein, preferably, the third adjustment means comprise spring means (35, 36, 37) that allow for a spring-cushioned divergence of the fork arms relative to each other, wherein, preferably, the third adjustment centre line is transverse to the fork arm, as seen in a vertical plane of projection that comprises the working direction.

7. Device according to any one of the preceding claims, wherein the discs each are assemblies of an inner disc part (63) of a relatively resilient and/or elastic material, such as for instance a rubber, for direct contact with stem and foliage, and an outer disc part that has more flexural stiffness than the inner disc part of resilient and/or elastic material.

8. Device according to claim 7, wherein the discs each comprise an outer disc part that forms a flat surface made of resiliently bendable material, such as steel, wherein the disc part has a circumambulating circumferential edge.

9. Device according to claim 7, wherein the discs comprise an outer disc part having a disc hub (26) and a number of pins (64) extending from the hub towards the disc edge, wherein the discs further each comprise an inner disc part situated at the disc sides that face each other, wherein the flexural stiffness of the pins exceeds that of the inner disc part, wherein the pins are arranged so as to be regularly distributed in a circumferential sense, having an interstitial space between the consecutive pins, wherein the pins have free radial ends (64a), wherein the pins of both discs (17a, 17b) can cooperate to distort the inner disc parts in the contact area (K) between them.

10. Device according to claim 9, wherein the biasing means are furnished for setting the relative positions of the disc hubs (26a, 26b) in a circumferential sense and consequently of the pins (64) of the one disc relative to the pins of the other disc.

11. Device according to claim 9 or 10, wherein the outer disc parts have been arranged so as to be offset in a circumferential sense, in such a manner that the pins of the one disc part extend adjacent to interstitial spaces between the pins of the other disc part, as seen in a vertical plane of projection that comprises the working direction, wherein, preferably the pins of the one disc part extend in a centre plane of the interstitial space between the two adjacent pins of the other disc part.

12. Device according to claim 9, 10 or 11, wherein the pins are situated on a cone surface, in particular a truncated conical surface, of which the exterior side faces the other disc.

13. Method for removing stems and foliage from a crop in a field, comprising:
- propelling a haulm-topping device according to the invention in a working direction along and across the field, wherein the haulm-topping device comprises:
- a main frame and at least one haulm-topping unit held by the main frame,
wherein the haulm-topping unit comprises a pair of cooperating discs, each defining a main plane and each being able to bow away from its main plane, and a pair of disc holders for holding the discs,
wherein during propulsion of the haulm-topping device, the discs are rotated in a same sense around their respective disc centre lines, wherein, at their trailing edge the discs rotate upwardly,
wherein the discs in a direction with of the pair of discs converge towards each other in a downward direction in a vertical plane transverse to the working direction,
wherein the discs of the pair of discs converge towards each other in a horizontal plane in a direction that is opposite to the working direction, and
wherein during propulsion of the haulm-topping device, the discs are biased against each other under distortion thereof, to form a contact area at the circumferential edge,
wherein during propulsion of the haulm-topping device, a lower section of the stem with foliage is allowed to enter in the space between the discs and subsequently allowed to be engaged and clamped by both discs in the contact area and allowed to be pulled from the field by the discs, wherein, preferably, a device according to any one of the claims 1 - 12 is used as the haulm-topping device.

14. Method according to claim 13, wherein the angle between the disc centre lines of both discs is set using first adjustment means provided on the haulm-topping device, as seen in a first plane that comprises both disc centre lines, wherein, preferably, the angle is set using the first adjustment means around respective first adjustment centre lines that intersect the respective disc centre lines perpendicularly, wherein, preferably, the location of the contact area on the rotor surface of the discs is set using second adjustment means provided on the haulm-topping device, wherein, preferably, the location of the contact area is set using the second adjustment means so that the contact area is situated entirely behind the lowest point of the discs, wherein, preferably, the location of the contact area is set using the second adjustment means so that the contact area is situated entirely in the lower halves of the discs, wherein, preferably, the angle of the first plane that comprises the disc centre lines is set relative to the working direction using the second adjustment means, wherein, preferably the disc holders are set around respective second adjustment centre lines that are perpendicular to the respective first adjustment centre lines using the second adjustment means.

15. Method according to claim 14, wherein during propulsion of the haulm-topping device, the surface centre of gravity of the contact area is kept behind the lowest point of the discs and/or wherein during propulsion of the haulm-topping device, the surface centre of gravity of the contact area is kept below the disc centre lines, in particular at a height of 0.5R - R below the disc centre lines, wherein R is the radius of the discs in an unloaded condition.

16. Device (100) for removing stems and foliage from a crop in a field, comprising:
- a main frame to be propelled in a working direction (A) along and across the field, and
- at least one haulm-topping unit (1) held by the main frame,
wherein the haulm-topping unit comprises a pair of cooperating discs (17a, 17b), and a pair of disc holders (19a, 19b) for holding the discs,
wherein the disc holders comprise disc drives for rotating the discs in a same sense around respective disc centre lines, wherein at their trailing edge the discs rotate upwardly,
wherein the discs can be set so that they converge in a horizontally rearward direction and/or in a vertically downward direction,
wherein the haulm-topping unit comprises settable biasing means (21, 22, 23, 24, 27, 28, 33, 34, 35, 36, 37) for biasing the discs against each other under distortion thereof, to form a contact area (K) at the radial inside of the circumferential edge with which contact area the stem and foliage can be clamped for their removal from the field,
**characterized in that**
the discs have a disc hub (26) and a number of elastic pins (64) that extend from the hub towards the disc edge,
the discs furthermore each comprise an inner disc part (63) situated at the disc sides that face each other,
the flexural stiffness of the pins exceeds that of the inner disc parts,
the pins are arranged so as to be regularly distributed in a circumferential sense, having an interstitial space between consecutive pins,
the pins have free radial ends (64),
the biasing means are furnished for setting the relative positions of the disc hubs in a circumferential sense and consequently of the pins of the one disc relative to the pins of the other disc,
the pins of both discs can cooperate to distort the inner disc parts in the contact area (K) between them,
preferably, the inner disc parts are made of a rubbery material, preferably, the pins are radially oriented,
preferably, the discs have been arranged so as to be offset in a circumferential sense, in such a manner that the pins of the one disc extend adjacent to interstitial spaces between the pins of the other disc, as seen in a vertical plane of projection that comprises the working direction.

17. Device according to any one of the claims 1 - 12 or according to the preamble of claim 1, provided with a soil displacer (40) arranged in front of the discs in a working direction, for displacing soil in the vicinity of the stem where it projects out of the field,
wherein, preferably, the soil displacer comprises a pair of rollers (40a, 40b) arranged on the main frame, in particular circular cylindrical rollers, in particular straight circular cylindrical rollers, which are arranged next to each other on the main frame, and which are kept apart from each other at an interval using the circumferential surfaces to form a narrow interstitial space, and a roller drive for rotating the rollers around substantially upright rotation centre lines, in such a manner as to rotate in the interstitial space in a direction opposite to the direction of travel,
wherein, preferably, the rollers converge in a downward direction with their rotation centre lines, as seen in a vertical plane transverse to the direction of travel, in particular converge at a contained angle of less than 10 degrees, wherein, preferably, the rotational speed of the drive can be set, in one embodiment between 0.5 - 1.5 times the speed of the device in the working direction,
wherein, preferably, the rollers are positioned to engage a stem.
